# EUROPEAN PATENT APPLICATION

(11) **EP 1 487 214 A1**
(43) Date of publication of application: **15.12.2004**
(21) Application number: 03013141.1
(22) Date of filing: 11.06.2003
(51) Int. Cl.: H04N 7/24, H04N 5/00

(54) **A method and a system for synchronizing MHP applications in a data packet stream**

(71) Applicant: Digital Multimedia Technologies S.P.A., 20035 Lissone (MI) (IT)
(72) Inventor: Leuratti, Nino, c/o DMT, 20035 Lissone (IT); Piazza, Diego, c/o DMT, 20035 Lissone (IT); Savarese, Diego, c/o Cefriel, 20133 Milano (IT); Mapelli, Francesco, c/o Cefriel, 20133 Milano (IT); Rosa, Corrado, c/o Video Time, 20093 Cologno Monzese (MI) (IT)
(74) Representative: Grünecker, Kinkeldey, Stockmair & Schwanhäusser Anwaltssozietät

(57) **Abstract**

A method and a system are disclosed for synchronizing audio/video data with interactive applications in an interactive TV system. A trigger event data packet, such as the "Do It Now" command, is inserted into the video frame data packet stream at a location that is correlated to a data packet representing a specified video frame. Thus, a robust and effective synchronization mechanism is provided that also offers a high degree of compatibility with currently available equipment.

## Description

The present invention relates generally to digital video broadcasting (DVB) techniques and more particularly to a method and a system in which multimedia home platform (MHP) application are synchronized with video frames transmitted via a data packet stream that also includes data packets representing the video frames.

Digital video broadcasting refers to a standard for coordinating various aspects of digital TV broadcasting systems. Within this standard a plurality of issues concerning the digital TV broadcasting has been regulated, such as how digital TV signals are transmitted over cable, satellite, terrestrial broadcasting networks or multi-point microwave distribution systems, how digital videos and audio data are to be encoded into a bit stream, and in general, the coordination of the various parts of a digital TV system. In addition to the audio and video data, further information may be incorporated into a data stream, which may then be decoded and correspondingly handled at the receiver side. The decoding of the audio and video data and the additional information, a corresponding receiver device is required that is in compliance with the standard used for encoding the audio and video data, as well as any other additional information. Typically, the decoding device, which is also frequently referred to as a Set Top Box (STB), includes hardware and software components that allow the extraction of audio and video data and the identification and processing of data relating to the additional information. This data may not only contain specific information, such as news tickers, weather broadcasts, stock tickers, and the like, but may also include source code for instructions that are executed on the user's TV device after decoding. The multimedia home platform is an attempt to provide a platform for communicating and executing a variety of interoperable applications that may or may not be related to a specific audio and video data set.

In its simplest form, the MHP represents a set of Java APIs (application programming interface) that are broadcast as a part of the data packet stream. At the receiver side, an MHP-compliant device can then decode and run these applications on the TV, wherein the employment of the software language Java assures a high degree of flexibility in creating any type of applications. Thus, the multimedia home platform defines a generic interface between interactive digital applications and the corresponding receiver or TV devices on which these applications are executed. By means of the multimedia home platform, the applications of different providers are, as long as the receiver devices are compliant with the multimedia home platform standard, independent of any specific hardware and software details with respect to broadcasting, receiving and running the interactive applications. Consequently, the MHP in connection with the digital video broadcasting standard allows the digital broadcast of audio and video services along with executable applications, wherein by means of these interactive applications, the user may interact locally. That is, the user may select one or options offered by the interactive applications. In a further aspect, the interactive applications may enable a range of interactive services associated or independent of the broadcast services, wherein an interaction channel is required to allow the user to respond to the interactive application. For instance, a home shopping television transmitter may offer the interactive application of ordering a product by operating the remote control of the user's TV device.

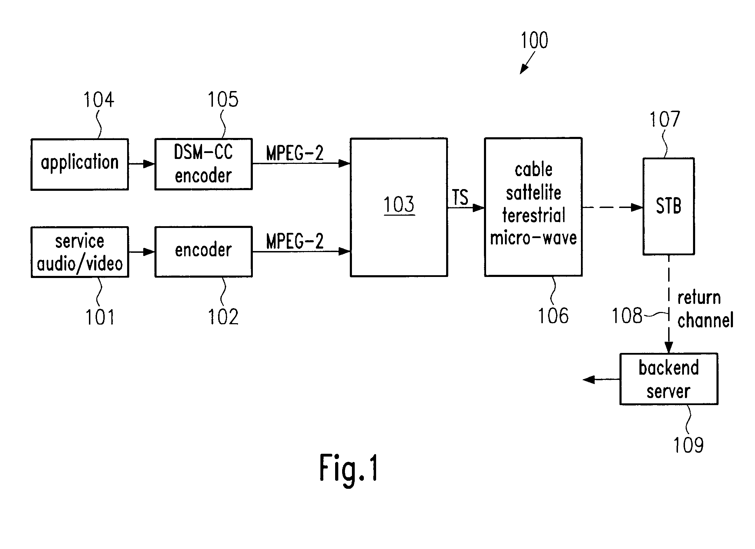

With reference to Fig. 1, a typical interactive broadcast chain will now be more described in detail.

In Fig. 1, an interactive broadcasting system 100 comprises a service unit 101 providing the audio and video data for a specified program. For instance, the audio and video data provided by the service unit 101 may represent a game show. Basically the audio and video data supplied by the service unit 101 include a sequence of video frames and one or more audio tracks related to the video frame sequence. For convenience sake, it is assumed that the program delivered by service unit 101 is a singular video frame sequence, whereas in other cases, a plurality of video sequences may make up the program supplied by the service unit 101, wherein each video frame sequence may for example represent a different camera angle, and the like. The service unit 101 is connected to an encoder 102, which is configured to convert and compress the audio and video data supplied by the service unit 101. Moreover, the encoder 102 is adapted to encode the digital audio and video data into a series of data packets in accordance with a specified standard, such as the MPEG2 standard. The output of the encoder 102, supplying the audio and video data in a significantly compressed and packaged manner, is connected to a multiplexer 103, which may be provided in the form of a hardware and/or a software unit so as to combine two or more MPEG2 data streams, which may also be referred to as elementary streams, into a single Transport Stream (TS). Moreover, an application unit 104 is connected to a corresponding encoder 105, which, in turn, is further connected to a further input of the multiplexer 103. The application unit 104 may contain a plurality of interactive applications, provided in the form of an appropriate source code, which are then supplied to the encoder 105, which may partially conform, in addition to the MHP standard, to the DSM-CC standard (Digital Storage Media-Command and Control) to provide a further MPEG2 complying data packet stream to the multiplexer 103. The muliplexer 103 may then combine the audio/video data packet stream with the application data packet stream into the single transport stream. For the sake of simplicity, only one service unit 101 is shown, whereas in actual systems a plurality of service units, i.e. of programs, may be combined into a single transport stream. Moreover, the application unit 104 is typically configured so as to provide the respective interactive applications continuously, thereby assuring the presence of a required application at the user's side irrespective of the time point of selecting the service provided by the service unit 101. The application unit 104 is therefore frequently referred to object carousel (OC), providing each application repeatedly, wherein the frequency of repetition of a specified application may be controlled by placing one application more often within the object carousel than another one.

The multiplexer 103, outputting the single transport stream, is connected to a transmission network 106, which may allow the transmission of the transport stream by cable, satellite, terrestrial transmitters and by microwave transmitters. Connected to the transmission network 106 is a receiver device 107, also referred to Set Top Box, that is configured to decode the data packet stream received via the transmission network 106. To this end, the receiver device 107 splits the data packets received into corresponding audio and video data as well as application data, wherein all data are retransformed in accordance with the coding standard used in the encoders 105 and 102. Furthermore, the receiver device 107 is adapted to run the one or more applications provided by the application unit 104 on the user's TV. The receiver device 107 may further be connected to a return channel 108, which, in turn, is connected to a back end server 109.

During operation of the digital broadcasting system 100, the service unit 101 may provide a specified TV program, such as a game show or product information from a phone shopping channel. Simultaneously, the application unit 105 may permanently provide one or more applications relating to the audio and video data provided by the service unit 101. After decoding the audio and video data in the receiver device 107 and presenting the data on the TV, at the same time the one or more applications are also executed and may enable the user to locally and globally interact with the TV program. For example, in some applications, a certain degree of synchronization between a specific application and the currently presented audio and video data is required for a proper function of the application. For example, a game show may allow a user to interactively respond to any questions by means of the TV remote control, wherein, however, the remote control may be allowed to accept an input only within a specified time interval or only in association with a specified video frame sequence. Upon actuating the remote control a corresponding signal may be transmitted via the return channel 108 to the back end server 109, which, in turn, initiates a corresponding action. Thus, it is necessary to associate a specific frame of the audio and video frame sequence with a synchronization or trigger event that then may initiate the related interactive application. Thereby, the receiver device 107 and the interactive application must have the ability to intercept, that is to locate and identify the synchronization event and initiate the activities required for running the application. Locating and identifying the synchronization event is to be performed in a reliable fashion and within a well defined time frame so as to avoid the loss of "synchronization" between the interactive application and the video frame associated therewith.

Several approaches have been proposed and in the prior art to cope with the problem of synchronizing video data and interactive applications.

In one approach, a synchronization event is inserted into a specific frame header of the elementary data stream output by the encoder 102. That is, after coding the video and audio data provided in the form of audio and video frame sequences, the individual frames can still be identified after the frames have been encoded into a data packet stream according to the MPEG2 standard. The data packet has a specified header which may have enough space to insert a synchronization command. To this end, the space labeled as "private data" is provided, which is a specified space for introducing data other than video and audio data within an MPEG2 data packet. It appears, however, that during transmission the insertion of a synchronization command into the "private data" space is not allowed by the specifications of the majority of available data encoders. Moreover most of the currently available encoders do not allow any frame marking or manipulation.

A further issue arises during he process of the receiving the data packet stream, wherein the synchronization command must be read from the 'private data" space and must then be issued to the specified interactive application. A corresponding set of functionalities is typically not available on standard Set Top Boxes.

In a further approaches, the synchronization command may be inserted into the transport stream (TS) output by the multiplexer 103, for example in a space referred to as the adaptation field. However, as pointed out above, restrictions posed by the encoder software and/or hardware may prevent the corresponding synchronization event from being written into the adaptation field. Moreover, during the receipt of the data packet stream the same problems may arise as talked about above. Further, it has been proposed to use so-called scheduled events. The application unit 104, that is the object carousel, contains mostly files, representing a specified application, but also include other types of objects, such as streams and stream events. Streams output by the encoder 105, that is DSM-CC streams, represent a reference to the an MPEG2 program or to one or more elementary streams. In addition to providing a reference to an MPEG2 program, the stream object contains further information that could be useful or required in an application. For instance, the stream object may contain a description of the stream, its duration, and the type of data within the stream and the like. The stream events provide a description of triggers which are embedded in the audio and video stream output by the encoder 102. The stream event object in the application unit 104, that is in the object carousel, may represent a general description of an event, including details such as an event name and an event identification, and the like. Although a stream event object provides a description of synchronization events, it includes no information about the "activation" of these synchronization events. This is accomplished by providing special descriptors within the MPEG2 data wherein the location of the descriptor is included in the stream event object. Each stream event descriptor includes at least two pieces of information, one relating to the event identification and one relating to an NPT value, wherein the NPT value (Normal Play Time) is a time code that may be optionally embedded in a stream to allow a synchronization between applications and MPEG2 data. Although the NPT mechanism is quite efficient to deal with requirements related to the editing of TV sequences with respect to errors occurring during the reconstruction phase of the TV sequence on the receiver side, only a restricted flexibility is offered by this mechanism when the synchronization of video data and applications is concerned. For instance, the functions required to deal with the NPT signal are included in object carousel generators currently available on the market, which, however, in the system as shown in Fig. 1 is of minor use as there exists no visibility of the audio/video data contents, which prevents linking the NPT signal to the system time clock of the architecture in Fig. 1. Moreover, the generation of the NPT signal should be carried out after encoding the audio and video data by the encoder 102, wherein currently multiplexer architectures having the capability of generating an according NPT signal are currently not available.

A modified type of a stream event that does not require an NPT value is the so-called "Do It Now" event, which initiates the immediate triggering of an application once the "Do It Now" event is received. Since an NPT value is not required for this type of event, "Do It Now" events are frequently used in the MHP world. Thus, currently available receiver devices 107 are equipped with dedicated hardware filters to reliably identify any "Do It Now" events. With respect to synchronizing interactive applications with video data, the "Do It Now" command is, however, inappropriate owing to its absolute asynchronous nature as it is issued from the application unit 104, i.e. from the object carousel, which is not related to the encoding of the audio and video data.

In view of the above-identified problems, it is therefore an object of the present invention to provide an improved technique that enables the synchronization of interactive applications with video frames, wherein simplicity and compatibility with existing hardware and software components is provided to a high degree.

According to one aspect of the present invention, the above object is solved by a method of synchronizing a data packet stream and a video frame sequence including the following features.

First, a specified structure and identification for a trigger data packet in the packet stream is defined and a specified video frame in the video frame sequence is selected so as to enable a response to the specified video frame according to a predefined time correlation upon receipt of the specified video frame at a receiver's side. Next, the video frame sequence is transformed into a series of video data packets that conform to the data packet stream. Moreover, a location of at least one data packet corresponding to the specified video frame is identified and the trigger data packet is inserted into the data packet stream at a location that is correlated in a predetermined manner to the location of the at least one data packet.

According to the inventive method, a specified video frame may be identified prior to encoding the video frame sequence, wherein a correspondingly defined and structured trigger data packet is associated to the specified video frame and is placed in a "neighborhood" of at least one video data packet representing the specified video frame so as to establish a time correlation between the specified video frame and the trigger data packet. The trigger data packet may have a structure that may conveniently be recognized and decoded by currently available receiver devices, such as Set Top Boxes, wherein the reliable receipt and decoding of the trigger data packet assures a desired response, for example by a corresponding interactive application, within a specified time interval.

The insertion of the trigger data packet in the vicinity of the video data packet corresponding to the specified video frame may be carried out in accordance with a predetermined correlation. For example, the trigger data packet may be inserted immediately before or after the at least one video packet, so that a time correlation within a range of accuracy corresponding to a single video frame may be accomplished.

In a further preferred embodiment of an interactive application is provided within the data packet stream wherein the interactive application is responsive to the trigger data packet upon receipt and decoding of the data packet stream on the receiver side. In this way a synchronization of any interactive applications and the audio and video content of a digital TV program is accomplished in a reliable manner.

Preferably, a common tag is assigned to the interactive application and a specified trigger data packet so as to facilitate the identification of the trigger event by the interactive application upon receipt at the receiver side.

In a further preferred embodiment, an event identification is assigned to the specified trigger data packet, wherein the event identification represents a specified response of the interactive application to the specified trigger data packet upon receipt thereof. Thus, the event identification enables the interactive application to provide a plurality of options in responding to trigger events having the same common tag, wherein the event identification then specifies the desired option. Advantageously, the common tag and /or the event identification are defined in advance by an application provider and by an audio/video contents provider so that a high degree of flexibility is available for the audio/video contents provider in providing global interactivity to a TV user.

In a further embodiment application specific data are incorporated into the specified trigger data packet, wherein the application specific data may effect a specific response of the interactive application upon receipt and decoding of the data packet stream. The application specific data may allow the audio/video provider to control, to a certain extent, the interactive application in addition to timely appropriately activating the application. For instance, the application specific data may include control information to enable the control of a time interval for which the interactive application should be active or to control behavior of the application.

According to a further preferred embodiment, selecting a specified video frame includes assigning a time code to the video frame sequence and entering information related to the time code of the specified video frame in a correspondence table. In this way, a simple and unique correspondence between a trigger data packet and a corresponding video frame may be established, wherein the correspondence table may be obtained in a post-production processing, i.e. after the entirety of audio and video data is gathered and is prepared to be digitized and broadcast, or in substantially "real time" manner, wherein the correspondence table is established substantially simultaneously with the generation of the audio and video data. In this "live" scenario the correspondence table may receive a corresponding entry, once a specified video frame required for triggering an interactive application is produced.

In a further embodiment, the identification of the location of at least one data packet associated with the specified video frame further includes comparing the time code of the video frame sequence with the correspondence table and issuing a trigger signal upon identifying a correspondence to the specified video frame. Thus, the occurrence of the specified video frame is determined by the trigger signal, which may include a single flag, or in other cases may include specific data relating to the type of trigger event that should be synchronized with the specified video frame.

In a further preferred embodiment, the method comprises determining a delay in transforming the video frame sequence into the series of video data packets, and inserting the trigger data packet into the data packet stream on the basis of the trigger signal and the determined delay. In this way, the trigger data packet may be placed within the data packet stream at a precise predefined location, irrespective of any delays caused by the encoding process to convert the video frames into digital signal packets. Advantageously, any delay in generating the trigger signal upon identifying a correspondence between the specified video frame in the correspondence table may also be determined and the process of inserting the trigger data packet into the data packet stream may additionally be based on the delay for generating and processing the trigger signal. Thus, the synchronization of the trigger data packets and the corresponding video frame is precise within a desired accuracy range and particularly allows a precision of the synchronization within a single video frame.

In a further preferred embodiment, inserting the trigger data packet into the data packet stream includes inserting the trigger data packet and removing a preceding or a following null packet from the data packet stream so as to maintain an average constant bit rate.

Advantageously, the null packet is the first null packet following the trigger data packet in the data packet stream. Thus, a local variation of the data bit stream is restricted within a relatively small section of the data packet stream.

Preferably, inserting the trigger data packet into the data packet stream includes replacing a null packet by the specified trigger data packet. In this way, the local bit rate remains constant during the insertion of the trigger data packet.

In a further preferred embodiment, a null packet is replaced by the specified trigger data packet when the null packet is within a predefined section of the data packet stream after an occurrence of a trigger signal indicating the insertion of the specified trigger data packet, and the specified trigger data packet is added to the data packet stream when no null packet is within a predefined section.

In this way, any bit rate fluctuations are minimized, since a specified section of the data packet stream may be searched for any null packets and the first null packet is replaced by the trigger data packet. Otherwise, the trigger data packet is added to the data packet stream. Advantageously, the predefined section of the data packet stream to be searched for a null packet is selected so as to conform with the desired degree of "synchronization" or time correlation with the specified video frame. For a "close" correlation, the length of the section to be searched for may be selected correspondingly short.

Preferably, the data packet stream conforms to the MPEG2 standard, thereby enabling a high degree of compatibility with currently available data communications systems.

Advantageously, the specified trigger data packet is defined and structured in accordance with a "Do It Now" command specified in the DSM-CC standard. As previously pointed out, the "Do It Now" commands are frequently used in current interactive TV systems and are supported by currently available Set Top Boxes, thereby assuring compatibility of the present invention to existing systems at the receiver's side.

According to a further aspect of the present invention, a data packet synchronization system comprises encoding means for transforming a time coded sequence of video frames into a data packet stream. Moreover, comparator means are provided for comparing the time code of the sequence of video frames with a reference code and providing a trigger signal indicating a result of the comparison. The system further comprises distributor means for receiving the time coded sequence of video frames and for supplying the sequence of video frames to the encoding means and comparator means. Finally, the system comprises means for inserting, based on the trigger signal, a trigger data packet into the data packet stream that is output by the encoding means.

The inventive synchronization system enables the provision of an audio/video sequence to an encoder and simultaneously to a comparator, which is configured to output a trigger signal when a time code of a video frame matches a predefined comparison criterion. The trigger signal output by the comparator assures a strong time correlation between the specified video frame meeting the comparison criterion and a trigger data packet inserted in the data packet stream by the corresponding inserting means.

Preferably, the system further comprises an object carousel generator that is configured to provide an application object in the form of object data packets, and a multiplexer that is configured to combine the data packet stream and the object data packets into a single transport stream.

Thus, the inventive synchronization is equipped to provide audio and video data along with corresponding interactive applications, wherein conveniently specified trigger data packets may be assigned to one or more applications, thereby accomplishing a "strong" synchronization between the interactive application and the audio and video data.

Preferably, the data packet synchronization system further comprises means for determining a delay in transforming the sequence of video frames into video data packets for the data packet stream. Thus, a strong synchronization may be accomplished even though a delay in encoding the audio and video data may occur.

Advantageously, the system further comprises means for estimating a delay in establishing the trigger signal output by the comparator means. In this way, any delay in issuing a trigger signal may be compensated, thereby attaining a desired degree of accuracy in synchronizing a video frame and a corresponding trigger data packet.

In another preferred embodiment, the inserting means are further configured to rewrite a program service information indicating the data packet stream, when the trigger data packet is inserted, thereby updating the program service information.

Further advantages as well as embodiments are specified in the appended claims and are also described in the following detailed descriptions, and depicted in the accompanying drawings, in which,
- Fig. 1: schematically depicts a simplified presentation of a system used in interactive TV applications; and
- Fig. 2: shows a diagram of a data packet synchronization system in accordance with one illustrative embodiment of the present invention.

In the following detailed description, further illustrative embodiments of the present invention will be described with reference to synchronizing video frames encoded by the MPEG2 standard to trigger data packets formatted according to the "Do It Now" structure, since these data structures are presently considered the favorable candidates for the digital broadcasting system. However, the principles of the present invention may also be applied to any other standard for encoding video frames into a data packet stream and to any data packets usable as trigger data packets that are reliably detected and decoded by receiver software and hardware. Thus, the present invention should not be considered as being limited to the following detailed embodiments, unless corresponding features are explicitly recited in the appended claims.

The basic concept of the present invention resides in the principle to generate a "Do It Now" event in synchronization with an audio/video signal with a desired degree of accuracy, which according to the present invention may enable to assign a specified "Do It Now" event, also referred to as trigger event hereinafter, to a specified video frame in that the "Do It Now" event is located next to or in the vicinity of a data packet representing a specified video frame.

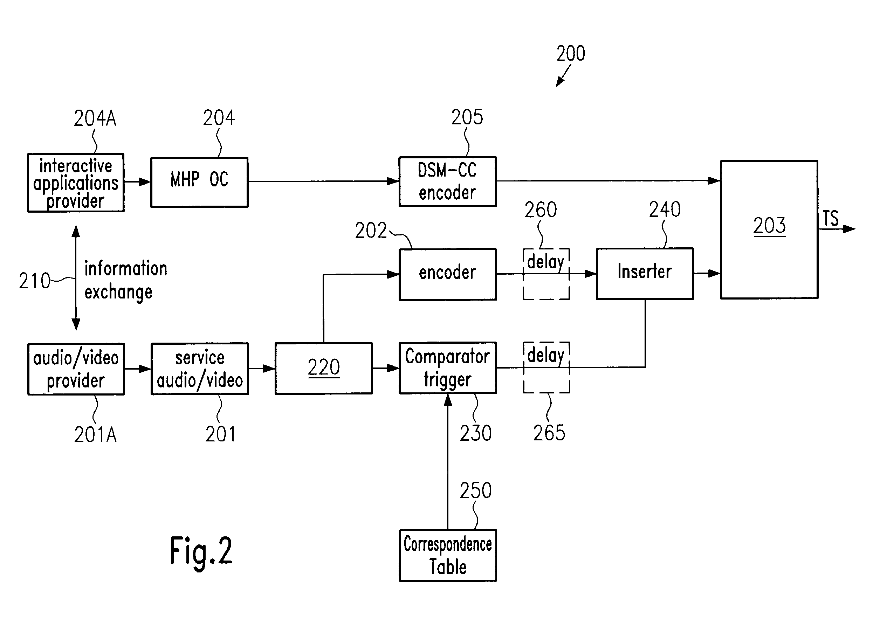

Fig. 2 schematically shows a data packet synchronization system 200 according to the present invention. An audio/video data provider 201A and an interactive application provider 204A represent any entities, companies, individuals, and the like that are capable of providing and/or producing audio/video data and interactive applications, respectively. A service unit 201 is configured to provide audio/video data for an interactive TV program, which may be produced, edited, directed and alike by the audio/video provider 201A. Similarly, an application unit 204 in the form of an object carousel is provided and may include one ore more interactive applications, for example, based on the MHP standard, which may be provided by the interactive applications provider 204A. The object carousel 204 is connected to a corresponding encoder means 205 that is configured to transform the data delivered by the object carousel 204 into an appropriately formatted data packet stream, which may for example conform to the MPEG2 standard. The encoder 205 is connected to a multiplexer 203 that is configured to receive a plurality of elementary data streams and to combine the individual elementary data streams into a single transporter stream, similarly as it is explained with reference to Figure 1 depicting a conventional system.

Contrary to the conventional system, in Fig. 2 the audio/video signals delivered by the service unit 201 are supplied to a distributor means 220 that is configured to provide at least two identical audio/video output signals corresponding to the input signals. In one simple configuration, the distributor means 220 may be implemented by a signal buffer that enables to provide the audio/video signal to an encoder 202 and to a comparator/trigger means 230 without substantial distortion of the audio/video signal. The comparator/trigger 230 is configured to receive the audio/video signal, compare the audio/video signal with a reference signal and to output a trigger signal in response to the comparison results. In one embodiment, the reference signal may be supplied by a correspondence table 250, which may be established in advance by the audio/video provider 201A upon producing a TV program that is to be supplied by the service unit 201. The correspondence table 250 may be established, i.e. updated, in a substantially "real time" manner on the basis of the audio/video signal supplied by the service unit 201. For instance, an operator may asses the audio/video signals delivered by the service unit 201 and may mark one or more of the video frames as reference frames, that is, as video frames that are to be synchronized with a trigger data packet, in the correspondence table 250. To this end, the distributor means 220 may be configured so as to correspondingly delay the audio/video signals supplied to the comparator/means 230 and the encoder 202, while providing the audio/video signals to the operator or any other appropriate institution for selecting desired reference frames. Thus, the correspondence table 250 may be established and updated on the basis of the initial audio/video signals, which may then be compared with the delayed signal portions.

The encoder 202 is connected to a data packet inserter 240, which also comprises an input for receiving the trigger signal supplied by the comparator/trigger means 230. The data packet inserter 240 is basically configured to generate a trigger data packet in accordance with a specified standard, which is in the present case the "Do It Now" structure. Furthermore, the inserter 240 is adapted to insert the trigger data packet into the data packet stream supplied by the encoder 202 on the basis of the trigger signal received from the comparator/trigger means 230. Finally, the output of the inserter 240 is connected to the multiplexer 203 to output a single transport stream TS.

Prior to the operation of the system 200, the interactive applications provider 204A and the audio/video 201A communicate so as to exchange information regarding a reference of the "Do It Now" event or events with respect to one or more interactive applications provided by the application provider 204A. As previously pointed out, "Do It Now" events are related to the interactive application via the "Stream Event Objects," wherein the "Do It Now" events are transported by dedicated packets having a specified tag packet identifier that is different from packet identifiers of data packet conveying the audio/video data. The stream event objects, on the other hand, are included in the object carousel 204. Therefore, the applications provider 204A and the audio/video provider 201A may preferably agree on a common tag that is assigned to these two components so as to maintain the correlation of these components even upon a remapping of packet identifiers as is often the case in the multiplexer 203 upon forming the single transport stream TS. Moreover, the providers 204A and 201A may agree on any event identifications so as to unambiguously define different responses of a specified application upon detecting a "Do It Now" event at the receiver's side. In other embodiments, application-specific data may be incorporated into the "Do It Now" packet in the "private data" space so as to identify a specified application or to effect an enhanced control of a specified interactive application. For instance, the applications provider 204A may provide the interactive applications with a certain degree of controllability executed on the basis of control information contained in the "Do It Now" packet.

Moreover, the applications provider 204A also inserts into the object carousel 204 any stream event objects required to identify trigger events included in the "Do It Now" packets upon a receipt and decoding at the receiver's side.

In this way, a maximum flexibility is accomplished, since the audio/video provider of the program included in the service unit 201, thereby independently deciding how and when to deal with interactive MHP applications provided by the provider 204A. The video contact provider 201A may then upon completion of a service and/or while producing a service establish the correspondence table 250 associating one or more specified frames of the audio/video data to specific "Do It Now" events. The correspondence can be established on the basis of a time code that is usually provided with the audio/video sequence representing the service 201.

Upon operating the system 200 the object carousel 204 provides repeatedly the interactive application, whereas the service unit 201 provides the time coded video frame sequence to the distributor means 220. The comparator/trigger means 230 receiving the time coded video frames sequence from the distributor means 220 may then read the time code of the video frame sequence and compare the time code with a reference signal, for example, in the form of correspondence table 250, which may contain information, which "Do It Now" event is to be linked with which specified video frame. When a corresponding match is encountered in the comparator/trigger means 230, a trigger signal may be issued to the inserter 240, wherein the trigger signal may simply include a flag for initiating the formation of a corresponding trigger data packet, or may include application-specific information and any private data associated thereto. As previously pointed out, a specified interactive application may allow a plurality of different responses or control mechanisms, which may then be included in the trigger data packet so as to initiate and/or control the specified interactive application synchronized to a specified video frame.

In the meantime, the audio/video data encoded by the encoder 202 are supplied in the form of a data packet stream to the inserter 240, which may now insert the "Do It Now" trigger data packet into the data packet stream based on the trigger signal obtained by the comparator/trigger means 230. In order to obtain a certain degree of accuracy in the synchronization between the specified video frame identified by the comparator/trigger means 230 and the actual time point of inserting the trigger data packet, the inserter 240 places the trigger data packet at a location in the data packet stream that is in the "neighborhood" of at least one data packet corresponding to the specified video frame. A corresponding range of the neighborhood, that is, the length of the section of the data packet stream containing the at least one data packet corresponding to the specified video frame, may be adjusted so as to achieve the accuracy required for the specific application.

For instance, in some applications, a high accuracy of synchronization may be required and thus the insertion of the trigger data packet has to be carried out adjacent to the at least one data packet corresponding to the specified video frame. To this end, means 260 may be provided to determine a delay required for encoding the audio/video signal by the encoder 202. Moreover, means 265 may be provided so as to determine any delay of the audio/video data in the comparator/trigger means 230 and in the issuance of the trigger signal to the inserter 240. By determining the delay of one or both of these two signal paths, a corresponding trigger data packet may be precisely located adjacent to the corresponding video data packets. The insertion of the trigger data packet may be initiated upon receipt of the trigger signal from the comparator/trigger means 230 and/or on the basis of the required accuracy. Thereafter the first null packet may be suppressed so as to keep the average bit rate substantially constant, even though a local increase in the bit rate may be created. It should be noted that, due to a possible delay of the video data packet by the encoder 202, the trigger signal from the comparator/trigger means 230 may in some cases be provided to the inserter 240 prior to the arrival of the relevant video data packets. The inserter 240 may therefore remove a null packet "in advance" and may then insert the trigger data packet in accordance with the required time correlation.

In other cases, the inserter 240 may identify the first null packet after the insertion of the trigger data packet is instructed by the trigger signal and may then replace the identified null package by the trigger data packet. In this way, the bit rate value remains unchanged. Advantageously, the process of replacing of a null packet by the trigger data packet is performed only within a specified time interval that assures insertion of the trigger data packet within the required degree of accuracy. That is, the inserter 240 may read the incoming data packets and may replace a null packet with the trigger data packet, when the null packet is within a specified number of data packets, after the instruction for inserting the trigger data packet has been received. Otherwise, the trigger data packet is inserted and the next incoming null packet is then removed as pointed out above. Preferably, for high precision synchronization, the data trigger packet is inserted precisely as required by the trigger signal and then any null packet in the neighborhood of the trigger data packet is removed.

Upon inserting the trigger data packet, the program map table (PMT) is correspondingly updated by the inserter 240. Upon insertion of a new packet having a new packet identifier, the PMT has to be modified so as to allow the Set Top Box at the receiver's side to modify the associated elementary stream. In the present case, corresponding new stream descriptors are created to enable the identification of the new elementary stream by a component tag (association tag), thereby preventing the elimination of the linkage between the trigger event and the corresponding stream event object of the object carousel 204, when a packet identifier remapping subsequently occurs in the multiplexer 203.

Finally, the inserter 240 provides the modified data packet stream, including a "Do It Now" packet located at a position that is correlated to a specified video frame. The multiplexer 203 receives the data packet stream from the encoder 205 and from the inserter 240 so that audio/video components and MHP applications associated and synchronized with audio/video components are present. The multiplexer 203, combining the different elementary streams, is configured such as to combine the interactive applications corresponding to the service units 201, thereby forming a single transport stream TS. The transport stream communicated via an appropriate network (not shown) may then be decoded at the receiver's side, including all functions required to properly run the interactive application in connection with the desired video program.

As a result, the present invention discloses a method and a system, in which a robust and an accurate synchronization between interactive applications and a video frame sequence is accomplished by inserting "Do It Now" events in a timely correlated manner into the video data packet stream. Thus, a synchronization is achieved that allows the association of a desired response of an interactive application to a specified video frame. The synchronization is obtained on a transport stream level and is thus independent of the type of broadcasting and transport architecture. Moreover, the disclosed technique operates with signals available on standard equipment interfaces and is therefore applicable to open interfaces, without requiring modifications to current playout, encoding and multiplexing equipment. Preferably, the "Do It Now" mechanism is used, which is already well established and well handled by currently available Set Top Boxes. The trigger event may be "specialized" by means of the employment of event identifications or private data. Moreover, the present invention allows a simple separation between the platform providing the audio/video service and the platform providing the interactive applications, thereby creating a high degree of flexibility in producing interactive TV programs by audio/video content providers.

## Claims

1. A method of synchronizing a data packet stream and a video frame sequence, the method comprising:
defining a specified structure and identification for a trigger data packet conforming to said data packet stream,
selecting a specified video frame in said video frame sequence so as to enable a response to the specified video frame according to a predefined time correlation upon receipt of said specified video frame at a receiver side,
transforming said video frame sequence into a series of video data packets conforming to said data packet stream,
identifying a location of at least one data packet corresponding to said specified video frame, and
inserting said trigger data packet into said data packet stream at a location that is correlated in a predetermined manner to the location of the at least one data packet.

2. The method of claim 1, further comprising providing an interactive application within said data packet stream, wherein said interactive application is responsive to said trigger data packet upon receipt and decoding of said data packet stream on the receiver side.

3. The method of claim 2, further comprising assigning a common tag to said interactive application and said specified trigger data packet.

4. The method of claim 2 or 3, further comprising assigning an event identification to said specified trigger data packet, said event identification representing a specified response of said interactive application to the specified trigger data packet.

5. The method of claim 2 or 3, further comprising incorporating application specific data into said specified trigger data packet, the application specific data effecting a specific response of the interactive application upon receipt and decoding of the data packet stream.

6. The method of any of claims 1 to 5, wherein selecting a specified video frame includes assigning a time code to said video frame sequence and entering information related to the time code of said specified video frame in a correspondence table.

7. The method of claim 6 and claim 2, wherein said information further includes a correspondence between said interactive application and said trigger data packet.

8. The method of claim 6, wherein identifying the location of said at least one data packet further includes comparing the time code of the video frame sequence with the correspondence table, and issuing a trigger signal upon identifying a correspondence to said specified video frame.

9. The method of claim 8, further comprising determining a delay in transforming said video frame sequence into the series of video data packets, and inserting said trigger data packet into the data packet stream on the basis of said trigger signal and the determined delay.

10. The method of any of claims 1 to 9, wherein inserting said trigger data packet into the data packet stream includes inserting said trigger data packet and removing a preceding or a following null packet from the data packet stream so as to maintain an averaged bit rate constant.

11. The method of claim 10, wherein said null packet is the first null packet following the trigger data packet.

12. The method of claim 10, wherein inserting said trigger data packet into the data packet stream includes replacing a null packet by said specified trigger data packet.

13. The method of claim 10, wherein a null packet is replaced by said specified trigger data packet when said null packet is within a predefined section of the data packet stream after occurrence of a trigger signal indicating the insertion of the specified trigger data packet, and wherein the specified trigger data packet is inserted when no null packet is within the predefined section.

14. The method of any of claims 1 to 13, wherein said data packet stream conforms to the MPEG2 standard.

15. The method of any of claims 1 to 14, wherein said specified trigger data packet conforms to a "do it now" command according to the DSM-CC standard.

16. A data packet synchronisation system comprising:
encoding means for transforming a time-coded sequence of video frames into a data packet stream,
comparator means for comparing the time code of said sequence of video frames with a reference code and providing a trigger signal indicating a result of the comparison,
distributor means for receiving said time-coded sequence of video frames and supplying said sequence of video frames to said encoding means and said comparator means, and
insertion means for inserting, based on said trigger signal, a trigger data packet into said data packet stream output by said encoding means.

17. The data packet synchronisation system of claim 16, further comprising:
an object carousel generator configured to provide an application object in form of object data packets, and
a multiplexer configured to combine said data packet stream and said object data packets to a single transport stream.

18. The data packet synchronisation system of claim 17, wherein the object carousel generator provides at least one application object that is related to said trigger data packet.

19. The data packet synchronisation system of any of claims 15 to 18, further comprising means for determining a delay in transforming said sequence of video frames into video data packets for the data packet stream.

20. The data packet synchronisation system of claim 19, wherein said insertion means is connected to said means for determining the delay and whereby the insertion means is further configured to insert said trigger data packet based on the determined delay.

21. The data packet synchronisation system of any of claims 15 to 20, wherein said insertion means is further configured to rewrite a program service information indicating said data packet stream when the trigger data packet is inserted so as to update the program service information.

22. The data packet synchronisation system of claim of any of claims 15 to 21, wherein the insertion means is further configured to identify a null packet in said data packet stream and to correlate the occurrence of the null packet to said trigger signal.
